# EUROPEAN PATENT APPLICATION

(11) **EP 3 905 220 A1**
(43) Date of publication of application: **03.11.2021**
(21) Application number: 18945301.2
(22) Date of filing: 27.12.2018
(51) Int. Cl.: G08G 1/16, G01C 21/34, G06Q 40/08, G08G 1/00

(54) **ACCIDENT INDEX CALCULATION DEVICE, INFORMATION PROVIDING DEVICE, CONTENT SELECTION DEVICE, INSURANCE PREMIUM SETTING DEVICE, ACCIDENT INDEX CALCULATION METHOD, AND PROGRAM**

(71) Applicant: Pioneer Corporation, Tokyo 113-0021 (JP)
(72) Inventor: YOSHIKI Satoshi, Tokyo 113-0021 (JP); IWAHORI Yasufumi, Tokyo 113-0021 (JP)
(74) Representative: Vossius & Partner Patentanwälte Rechtsanwälte mbB
(86) International application number: PCT/JP2018/048292
(87) International publication number: WO 2020/136840

(57) **Abstract**

A calculation data storage unit (120) of an accident index calculation apparatus (10) is used together with a map data storage apparatus. A first index acquisition unit (110) of the accident index calculation apparatus (10) acquires information (travel route specification information) for specifying a travel route of a vehicle (60), and acquires a first index by using the travel route specification information and map data stored in the map data storage apparatus (50). The first index is related to a unit road count, which is the number of unit roads included in the travel route per unit travel time. A calculation unit (130) calculates an index (a second index) related to likelihood of an accident (for example, a traffic accident) involving a driver of the vehicle (60) or the vehicle (60) .

## Description

### TECHNICAL FIELD

The present invention relates to an accident index calculation apparatus, an information providing apparatus, a content selection apparatus, an insurance premium setting apparatus, an accident index calculation method, and a program.

### BACKGROUND ART

When a vehicle travels on a road, it is important to calculate possibilities that the vehicle will cause an accident. For example, in Patent Document 1, a plurality of feature values related to a driving behavior of a driver are acquired, and a probability of an accident occurring is calculated by using the acquired feature values . The feature values used here are an inter-vehicle distance, a speed of a vehicle when a front camera detects a stop sign, a distance at which inattentive driving continues, and a passing time of the vehicle at an intersection when the front camera detects a red light.

### RELATED DOCUMENT

### PATENT DOCUMENT

[Patent Document 1] Japanese Unexamined Patent Publication No. 2016-42298

### SUMMARY OF THE INVENTION

### TECHNICAL PROBLEM

The present inventor examined calculation of an index related to likelihood of an accident involving a vehicle by using an index different from the related art. An example of the problem to be solved by the present invention includes that it is possible to calculate the index related to the likelihood of the accident involving the vehicle by using the index different from the related art.

### SOLUTION TO PROBLEM

According to the invention of claim 1, there is provided an accident index calculation apparatus including: a first index acquisition unit that acquires a first index related to a unit road count, which is the number of unit roads included in a travel route on which a vehicle traveled per unit travel time; and a calculation unit that calculates a second index related to likelihood of an accident involving a driver of the vehicle or the vehicle, by using the first index.

According to the invention of claim 9, there is provided an accident index calculation apparatus including: an acquisition unit that acquires a first index determined according to a fineness of unit roads included in a travel route on which a driver traveled by using a vehicle, and a travel speed on the travel route; and a calculation unit that calculates a second index related to likelihood of an accident involving the driver of the vehicle or the vehicle, by using the first index.

According to the invention of claim 10, there is provided an accident index calculation method including: by a computer, acquiring a first index related to a unit road count, which is the number of unit roads included in a travel route on which a vehicle traveled per unit travel time; and calculating a second index related to likelihood of an accident involving a driver of the vehicle or the vehicle, by using the first index.

According to the invention of claim 11, there is provided a program causing a computer to have : a first index acquisition function of acquiring a first index related to a unit road count, which is the number of unit roads included in a travel route on which a vehicle traveled per unit travel time; and a calculation function of calculating a second index related to likelihood of an accident involving a driver of the vehicle or the vehicle, by using the first index.

### BRIEF DESCRIPTION OF THE DRAWINGS

The above objects and other objects, features and advantages will become more apparent from the following description of the preferred embodiments and the accompanying drawings.

Fig. 1 is a diagram illustrating a use environment of an accident index calculation apparatus according to an embodiment.
Fig. 2 is a diagram illustrating an example of a functional configuration of the accident index calculation apparatus.
Fig. 3 is a diagram illustrating an example of data stored in a calculation data storage unit in a table format.
Fig. 4 is a diagram illustrating an example of a functional configuration of an information providing apparatus.
Fig. 5 is a diagram illustrating an example of a functional configuration of a content selection apparatus.
Fig. 6 is a diagram illustrating an example of a functional configuration of an insurance premium setting apparatus.
Fig. 7 is a diagram illustrating an example of a hardware configuration of the accident index calculation apparatus.
Fig. 8 is a flowchart illustrating an example of a process performed by the accident index calculation apparatus.
Fig. 9 is a flowchart illustrating a first example of step S20 in Fig. 8.
Fig. 10 is a flowchart illustrating a second example of step S20 in Fig. 8.
Fig. 11 is a flowchart illustrating a third example of step S20 in Fig. 8.
Fig. 12 is a flowchart illustrating an example of a process performed by the information providing apparatus.
Fig. 13 is a flowchart illustrating an example of a process performed by the content selection apparatus.
Fig. 14 is a flowchart illustrating an example of a process performed by the insurance premium setting apparatus.

### DESCRIPTION OF EMBODIMENTS

Hereinafter, embodiments according to the present invention will be described by using the drawings. In all of the drawings, the same components are denoted by the same reference numerals, and description thereof is not repeated as appropriate.

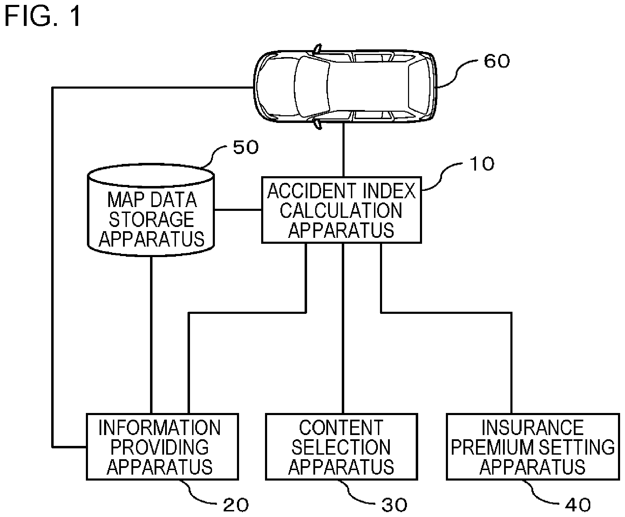

Fig. 1 is a diagram illustrating a use environment of an accident index calculation apparatus 10 according to an embodiment. The accident index calculation apparatus 10 is used together with a map data storage apparatus 50 to calculate an index (hereinafter, referred to as a second index) related to likelihood of an accident (for example, a traffic accident) involving a driver of a vehicle 60 or the vehicle 60. For example, the accident index calculation apparatus 10 acquires information for specifying a travel route of the vehicle 60 (hereinafter, referred to as travel route specification information), and acquires a first index by using the travel route specification information and map data stored in the map data storage apparatus 50. The first index is related to a unit road count, which is the number of unit roads included in the travel route per unit travel time. The first index can be considered to be determined according to a fineness of the unit road included in the travel route at which the driver traveled by using the vehicle and a travel speed in the travel route.

As a result of examination by the present inventor, this first index has a correlation with the likelihood of the accident. The likelihood of the accident includes both a case where the accident occurs due to the vehicle 60 and a case where the vehicle 60 gets caught in the accident. The accident index calculation apparatus 10 calculates the second index described above by using the first index. An example of the second index is a numerical value that increases or decreases depending on the likelihood of the vehicle 60 or the driver of the vehicle 60 to the accident.

The accident index calculation apparatus 10 acquires the travel route specification information of the vehicle 60 from, for example, an apparatus mounted on the vehicle 60. This apparatus is, for example, a travel route storage apparatus attached to the vehicle 60, or a mobile communication terminal possessed by a passenger of the vehicle 60. In the latter case, the accident index calculation apparatus 10 may acquire the travel route specification information at a timing when the mobile communication terminal is located outside the vehicle 60, or at a timing when the mobile communication terminal is located inside the vehicle 60. In any case, the apparatus may have, for example, a navigation function that guides routes on which the vehicle 60 should travel.

The travel route specification information includes a travel speed for each travel point. Further, the apparatus mounted on the vehicle 60 may transmit other information necessary for calculating the second index to the accident index calculation apparatus 10, in addition to the travel route specification information. An example of the information transmitted to the accident index calculation apparatus 10 includes the number of sudden accelerations (for example, a case where an accelerator pedal is stepped by a value equal to or more than a criterion value, or a case where positive acceleration is equal to or more than a criterion value), the number of sudden brakes (for example, a case where a brake pedal is stepped by a value equal to or more than a criterion value, or a case where negative acceleration is equal to or more than a criterion value), and the number of sudden steering wheel handlings (a case where at least one of a rotation speed and a rotation angle of the steering wheel is equal to or more than a criterion value, or a case where the acceleration in a right-left direction is equal to or more than a criterion value).

The accident index calculation apparatus 10 is located outside the vehicle 60, for example. In this case, the accident index calculation apparatus 10 communicates with the apparatus mounted on the vehicle 60 through, for example, a wireless communication network. The accident index calculation apparatus 10 may acquire the travel route determination information of the vehicle 60 from a server outside the vehicle 60. In this case, the server acquires the travel route information from the apparatus mounted on the vehicle 60.

The accident index calculation apparatus 10 may be mounted on the vehicle 60.

The map data storage apparatus 50 stores map data. This map data includes various information on roads (hereinafter, referred to as road information) . The road information includes, for example, nodes and links that specify a road, in addition to a length, the number of lanes, a speed limit, and a width of each link. One link may be divided into a plurality of sections, and at least one of the number of lanes, the speed limit, and the width may be set for each section. The map data storage apparatus 50 may be a part of the accident index calculation apparatus 10.

The map data storage apparatus 50 further stores points or areas at which a frequency of an accident is equal to or more than a criterion value as a danger point. Information indicating the danger point is, for example, a part of the map data. A plurality of levels are set at this danger point according to the frequency of the accident, that is, the degree of danger. In this case, the map data storage apparatus 50 stores the information indicating a position of the danger point in association with information indicating the level described above. This level may be set in stages or may be set in non-stage. The information indicating the level described above may be information indicating the frequency of the accident (for example, a numerical value indicating the frequency). In addition, the information indicating the level may be determined based on information relating with cases that may lead to an accident, such as near-miss accident information.

Further, the map data storage apparatus 50 stores a point at which a predetermined rule such as a stop sign is set, as a part of the map data, in association with the rule.

The second index calculated by the accident index calculation apparatus 10 is used by the information providing apparatus 20, the content selection apparatus 30, and the insurance premium setting apparatus 40. The information providing apparatus 20 uses the second index so as to set a criterion for selecting a point for which a control apparatus of the vehicle 60 or the driver of the vehicle 60 is to be notified of a warning, from the danger points stored in the map data storage apparatus 50. The information providing apparatus 20 may be a part of the navigation function used in the vehicle 60. The content selection apparatus 30 selects contents to be provided to the driver of the vehicle 60, by using the second index. The insurance premium setting apparatus 40 sets an insurance premium to be set for the vehicle 60 or the driver of the vehicle 60, by using the second index. Details of the processes performed by the information providing apparatus 20, the content selection apparatus 30, and the insurance premium setting apparatus 40 will be described below.

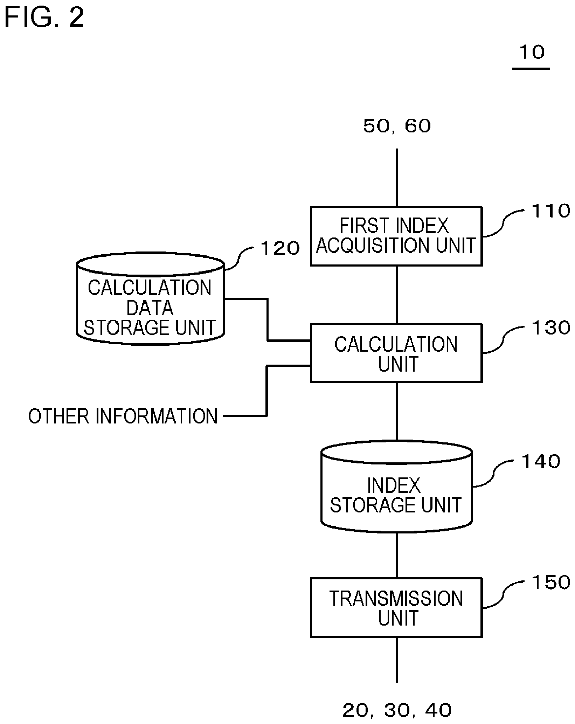

Fig. 2 is a diagram illustrating an example of a functional configuration of the accident index calculation apparatus 10. The accident index calculation apparatus 10 illustrated in Fig. 2 includes a first index acquisition unit 110, a calculation data storage unit 120, a calculation unit 130, an index storage unit 140, and a transmission unit 150.

The first index acquisition unit 110 acquires the first index described above. One of methods for the first index acquisition unit 110 to acquire the first index is for the first index acquisition unit 110 to calculate the first index.

For example, the first index acquisition unit 110 determines the first index, for example, the unit road count, by using the map data stored in the map data storage apparatus 50 and the travel route of the vehicle 60. Specifically, the first index acquisition unit 110 acquires the travel route specification information of the vehicle 60 from, for example, the apparatus mounted on the vehicle 60. Further, the first index acquisition unit 110 specifies a travel route of the vehicle 60 by using the travel route specification information, and acquires road information related to the travel route from the map data storage apparatus 50. The first index acquisition unit 110 calculates the first index by using the travel route specification information and the road information. The first index is, for example, the number of unit roads (the unit road count) . The unit road is defined, for example, as a link or between two nodes adjacent to each other on map data. In a case of counting the number of links, the number of changes in a link ID may be counted. Here, two or more links connected to each other may be treated as one unit road. Details of the calculation process for the first index will be described below by using a flowchart.

Meanwhile, the first index is not limited to the number of unit roads. For example, the first index may be the number of branches or an intersection count of a road included in the travel route, the number of intersections, and density of roads (for example, an average distance between road intersections or, for example, an occupation percentage of a road existing in an area within a predetermined area such as the travel area). In a case where the density of the road is used, for example, multiplication is performed on a travel distance by using a degree of the density as a coefficient, and in a case of evaluation per hour, division is further performed by using a travel time. Further, the number of branches or the intersection count of the road and the number of intersections may be generated in advance by a sensor (an imaging sensor or LiDAR) mounted on the vehicle 60 instead of the map data. In a case of calculating the number of passes per hour for the number of branches or the intersection count of the road and the number of intersections, for example, the number of branches or the intersection count of roads and the number of intersections passed within a predetermined time are detected and the number of passes per hour is calculated.

The calculation function for the first index described above may be possessed by an external apparatus of the accident index calculation apparatus 10. In this case, the accident index calculation apparatus 10 acquires the first index from this external apparatus.

The calculation data storage unit 120 stores data necessary when calculating the second index from the first index, for example, a coefficient indicating the influence of the first index on the second index. An example of data stored in the calculation data storage unit 120 will be described below by using a table.

The calculation unit 130 calculates the second index by using the first index acquired by the first index acquisition unit 110 and the data stored in the calculation data storage unit 120. In addition, the calculation unit 130 uses the travel route specification information to generate information necessary for calculating the second index. Further, the calculation unit 130 acquires information necessary for calculating the second index, if necessary. A method of acquiring this information may be, for example, a search of an external database by using vehicle identification information and driver identification information, or may be an input from a user of the accident index calculation apparatus 10.

The index storage unit 140 stores the second index calculated by the calculation unit 130 in association with at least one of information for identifying the vehicle 60 (hereinafter, referred to as vehicle identification information) and information for identifying the driver of the vehicle 60 (hereinafter, referred to as driver identification information). The vehicle identification information and the driver identification information used here are acquired, for example, together with the travel route specification information by the first index acquisition unit 110, but may be acquired by using another method.

When at least one of the driver identification information and the vehicle identification information is acquired from the information providing apparatus 20, the content selection apparatus 30, or the insurance premium setting apparatus 40, the transmission unit 150 reads the second index corresponding to the acquired information from the index storage unit 140, and returns the second index.

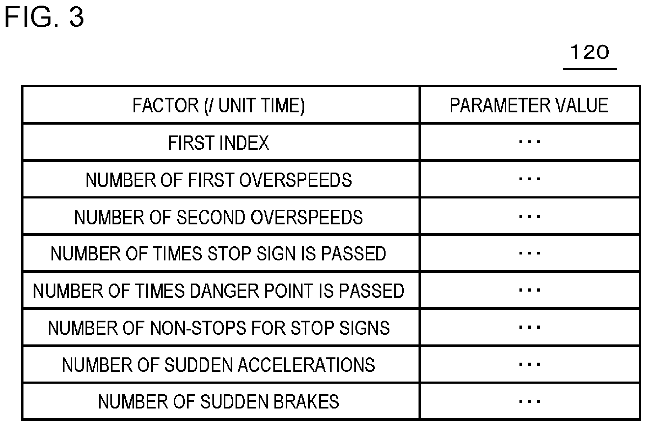

Fig. 3 is a diagram illustrating an example of data stored in the calculation data storage unit 120 in a table format. As described above, the data necessary for calculating the second index from the first index is stored. This necessary data includes, for example, an equation for calculating the second index from a plurality of parameter values including the first index. Fig. 3 illustrates items which are parameters included in this equation and coefficients corresponding to the parameters. In the example illustrated in Fig. 3, in addition to the first index described above, the parameter includes at least one of the number of overspeeds (which may be divided into a plurality of values according to the overspeed value. For example, the number of times of overspeed value equal to or more than a first criterion value, the number of times of overspeed value equal to or more than a second criterion value (> the first criterion value), or the like), the number of second traffic violation tickets (for example, notice), the number of times a stop sign location is passed, the number of times a danger point (which may be determined based on information on the point at which an accident actually occurs, may include near-miss accident points, and may be set as a road similar to these) defined in the map data storage apparatus 50 is passed, the number of violations for a stop sign, the number of one-way traffic passes, the number of violations for one-way traffic (reverse runs), the number of times a traffic signal is passed, the number of times the traffic signal is ignored, the number of sudden accelerations, the number of sudden brakes, and the number of sudden steering wheel handlings. For a value of each of these parameters, for example, an average value per unit time (for example, one hour) is used.

Of these, the calculation unit 130 acquires the number of first traffic violation tickets and the number of second traffic violation tickets are obtained by searching an external database using the vehicle identification information and the driver identification information, an input from the user of the accident index calculation apparatus 10, or calculation based on a detection result based on a violation behavior such as overspeed. Further, the number of times the danger point is passed and the number of violations for a stop sign are calculated by the calculation unit 130 by using the travel route specification information (including a travel speed for each travel point) and the map data. For example, the calculation unit 130 can determine that the vehicle 60 had violated the suspension in a case where a speed of the vehicle 60 was not 0 at a point at which the vehicle 60 was to be stopped for a stop sign. Further, the number of sudden accelerations, the number of sudden brakes, and the number of sudden steering wheel handlings are counted by, for example, the apparatus mounted on the vehicle 60, which is transmitted from this apparatus to the accident index calculation apparatus 10, and are finally acquired by the calculation unit 130. The acquisition method (calculation method) of the various types of parameters described above is not limited to the above example.

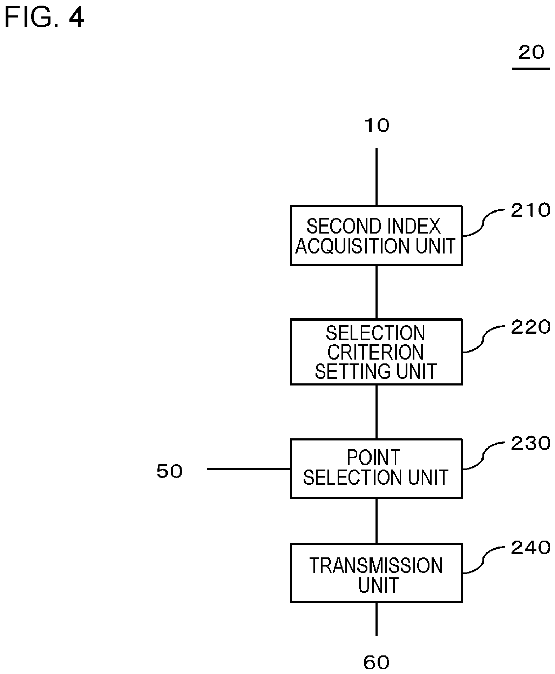

Fig. 4 is a diagram illustrating an example of a functional configuration of the information providing apparatus 20. The information providing apparatus 20 illustrated in Fig. 4 includes a second index acquisition unit 210, a selection criterion setting unit 220, a point selection unit 230, and a transmission unit 240. The second index acquisition unit 210 acquires the second index from the accident index calculation apparatus 10. The selection criterion setting unit 220 sets a criterion for selecting a point or an area for which the vehicle 60 or the driver of the vehicle 60 is to be notified of a warning by using the second index. The point selection unit 230 selects the point or the area at which the warning is to be notified, from the danger points stored in the map data storage apparatus 50, by using the criterion set by the selection criterion setting unit 220. The transmission unit 240 transmits the selected point or area to the external apparatus, for example, a navigation apparatus mounted on the vehicle 60. The destination navigation apparatus may be an apparatus attached to the vehicle 60 or the mobile communication terminal possessed by a passenger of the vehicle 60.

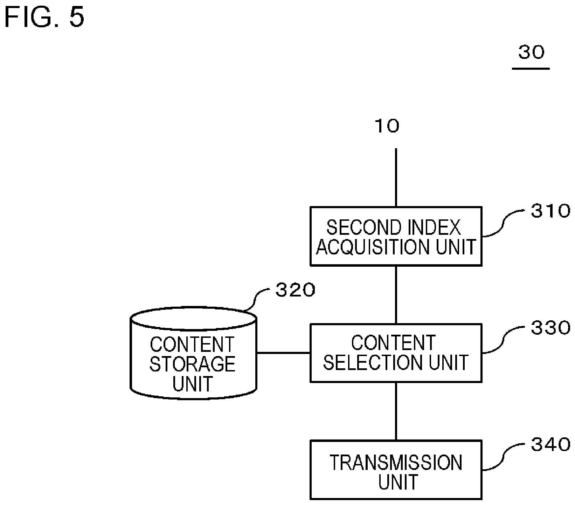

Fig. 5 is a diagram illustrating an example of a functional configuration of the content selection apparatus 30. The content selection apparatus 30 illustrated in Fig. 5 includes a second index acquisition unit 310, a content storage unit 320, a content selection unit 330, and a transmission unit 340. The second index acquisition unit 310 acquires the second index from the accident index calculation apparatus 10.

The content storage unit 320 stores contents to be provided to the driver of the vehicle 60 in association with information for specifying a value of the second index. The contents stored in the content storage unit 320 are, for example, educational contents for the driver, but are not limited thereto. Further, the information for specifying the value of the second index described above directly or indirectly indicates, for example, a range of the second index to which the content is to be provided. The content storage unit 320 may be located outside the content selection apparatus 30.

The content selection unit 330 reads a content corresponding to the second index set by the second index acquisition unit 310 from the content storage unit 320. The transmission unit 340 transmits the content read by the content selection unit 330 to an external apparatus . A destination of the content may be a display or a terminal of the driver of the vehicle 60.

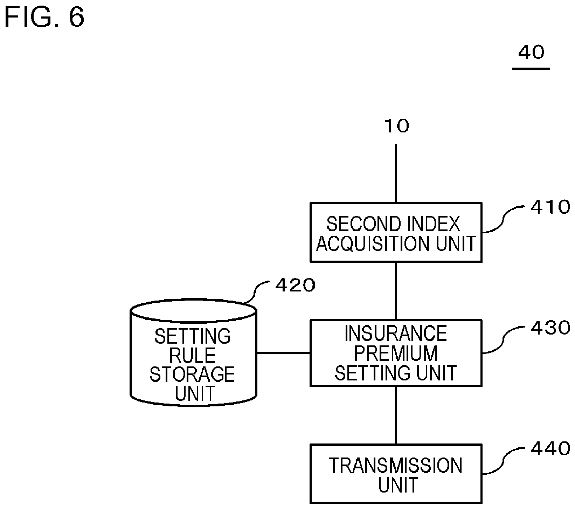

Fig. 6 is a diagram illustrating an example of a functional configuration of the insurance premium setting apparatus 40. The insurance premium setting apparatus 40 illustrated in Fig. 6 includes a second index acquisition unit 410, a setting rule storage unit 420, an insurance premium setting unit 430, and a transmission unit 440. The second index acquisition unit 410 acquires the second index from the accident index calculation apparatus 10. The setting rule storage unit 420 stores a rule for setting an insurance premium. This rule is, for example, a table or an arithmetic expression for calculating the insurance premium from a plurality of parameters. One of the plurality of parameters is the second index. The setting rule storage unit 420 may be located outside the insurance premium setting apparatus 40.

The insurance premium setting unit 430 calculates the insurance premium by using the second index acquired by the second index acquisition unit 410 and information stored in the setting rule storage unit 420. The transmission unit 440 transmits the insurance premium calculated by the insurance premium setting unit 430 to the external apparatus. A destination of the content may be a display or a terminal of the driver of the vehicle 60.

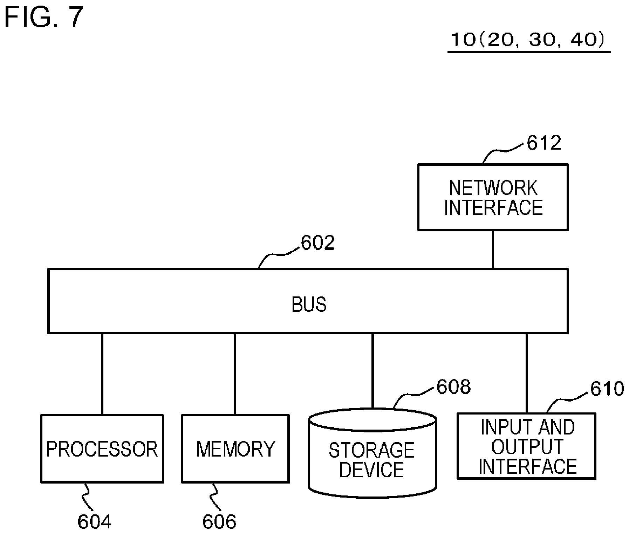

Fig. 7 is a diagram illustrating an example of a hardware configuration of the accident index calculation apparatus 10. The main configuration of the accident index calculation apparatus 10 is realized by using an integrated circuit. This integrated circuit includes a bus 602, a processor 604, a memory 606, a storage device 608, an input and output interface 610, and a network interface 612. The bus 602 is a data transmission line through which the processor 604, the memory 606, the storage device 608, the input and output interface 610, and the network interface 612 mutually transmit and receive data. Meanwhile, a method of connecting the processor 604 and the like to each other is not limited to bus connection. The processor 604 is an arithmetic processing unit realized by using a microprocessor or the like. The memory 606 is a memory realized by using a random access memory (RAM) or the like. The storage device 608 is a storage device realized by using a read only memory (ROM), a flash memory, or the like.

The input and output interface 610 is an interface for connecting the accident index calculation apparatus 10 to a peripheral device.

The network interface 612 is an interface for connecting the accident index calculation apparatus 10 to the communication network. A method by which the network interface 612 connects to the communication network may be a wireless connection or a wired connection.

The storage device 608 stores a program module for realizing each functional element of the accident index calculation apparatus 10. The processor 604 realizes each function of the accident index calculation apparatus 10 by reading and executing this program module into the memory 606. In addition, the storage device 608 functions as the calculation data storage unit 120.

Hardware configurations of the information providing apparatus 20, the content selection apparatus 30, and the insurance premium setting apparatus 40 have the same manner as the hardware configuration of the accident index calculation apparatus 10 illustrated in Fig. 7.

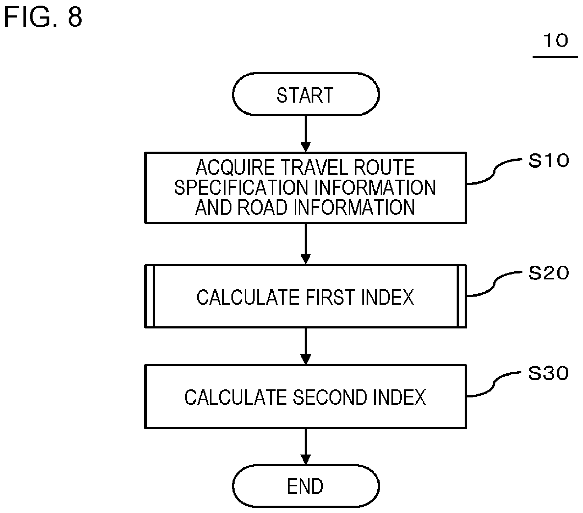

Fig. 8 is a flowchart illustrating an example of a process performed by the accident index calculation apparatus 10. First, the first index acquisition unit 110 acquires at least one of the vehicle identification information of the vehicle 60 for which the second index is calculated and the driver identification information of the driver. Next, the first index acquisition unit 110 acquires travel route specification information corresponding to the identification information from the apparatus mounted on the vehicle 60 or the server that stores the travel route. At this time, the first index acquisition unit 110 also acquires other information necessary for calculation of the first index and calculation of the second index (step S10).

Next, the first index acquisition unit 110 calculates the first index (step S20). Details of the first calculation process will be described below.

Next, the calculation unit 130 calculates the second index by using the data stored in the calculation data storage unit 120 and the first index calculated by the first index acquisition unit 110 (step S30). Specifically, the calculation unit 130 acquires the first index, and also acquires other necessary data necessary for calculating the second index. An example of these necessary data and a method of acquiring the data are as described with reference to Fig. 3. The calculation unit 130 calculates the second index by substituting the acquired various types of data (parameter values) into the equation stored in the calculation data storage unit 120. After that, the calculation unit 130 stores the second index in the index storage unit 140.

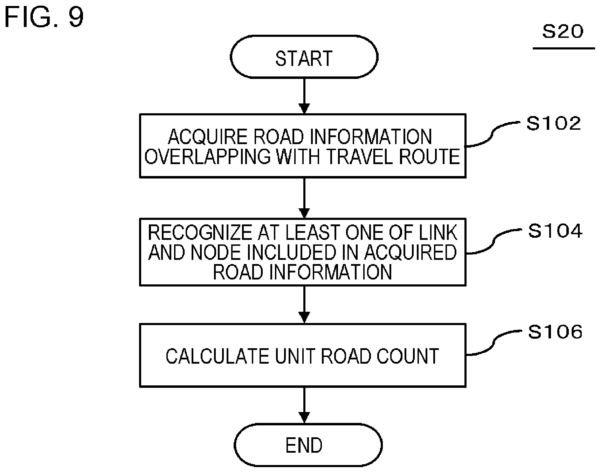

Fig. 9 is a flowchart illustrating a first example of step S20 in Fig. 8. First, the first index acquisition unit 110 recognizes a travel route indicated by the travel route specification information, and acquires map data of a road overlapping with the recognized travel route, from the map data storage apparatus 50. The map data includes road information such as a length of each link, the number of lanes, a speed limit, and a width, for example (step S102). Next, at least one of the link and the node included in the acquired road information is recognized (step S104).

The first index acquisition unit 110 calculates a unit road count by using the link and/or the node recognized in step S104 (step S106) . For example, in a case where the first index acquisition unit 110 recognizes the links in step S104, the number of recognized links is set as the unit road count. Further, in a case where the node is recognized in step S104, the first index acquisition unit 110 may set "the number of recognized nodes - 1" as the unit road count, determine links included in the travel route from the recognized node, and set the number of determined links as the unit road count.

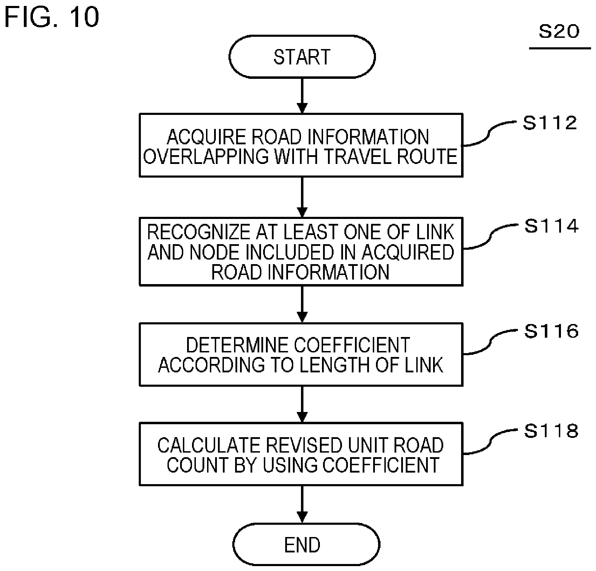

Fig. 10 is a flowchart illustrating a second example of step S20 in Fig. 8. First, the first index acquisition unit 110 performs the same process as in steps S102 and S104 in Fig. 9 (steps S112 and S114). In a case where a node is recognized in step S114, a link included in the travel route is determined from the recognized node. This process of determining the link is as described with reference to step S106 in Fig. 9.

Next, the first index acquisition unit 110 determines a length of each recognized link by using road information. The first index acquisition unit 110 determines a coefficient according to the length of the link for each link (step S116), and calculates the revised unit road count by using the determined coefficient (step S118) . As an example, in step S116, the coefficient is set so that the longer the link, the larger the coefficient. In other words, this coefficient can also be regarded as a value obtained by revising a value of "1" indicating the number of links according to the length of the link. In step S118, the first index acquisition unit 110 calculates the revised unit road count by adding the coefficients set for the links. A rule for converting the length of the link into the coefficient (for example, a conversion equation) is stored in advance in the accident index calculation apparatus 10.

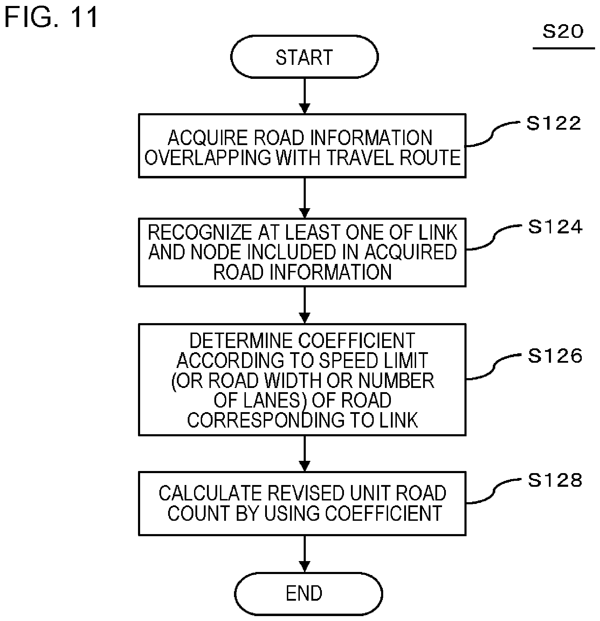

Fig. 11 is a flowchart illustrating a third example of step S20 in Fig. 8. First, the first index acquisition unit 110 performs the same process as in steps S102 and S104 in Fig. 9 (steps S122 and S124) . In a case where a node is recognized in step S124, a link included in a travel route is determined from the recognized node. This process of determining the link is as described with reference to step S106 in Fig. 9.

Next, the first index acquisition unit 110 determines a speed limit of each of the recognized links using road information. The first index acquisition unit 110 determines a coefficient according to the speed limit of the link for each link (step S126), and calculates the revised unit road count by using the determined coefficient (step S128). As an example, in step S126, the coefficient is set to be increased as the speed limit increases. In other words, this coefficient can also be regarded as a value obtained by revising a value of "1" indicating the number of links according to the speed limit of the link. In step S128, the first index acquisition unit 110 calculates the revised unit road count by adding the coefficients set for the links. A rule for converting the speed limit into the coefficient (for example, a conversion equation) is stored in advance in the accident index calculation apparatus 10.

In this example, one of the number of lanes and a width may be used instead of the speed limit. In this case, the coefficient is set so as to be increased as the number of lanes increases, for example. Further, the coefficient is set so that, for example, the narrower the width, the larger the coefficient. In addition, at least two of the speed limit, the number of lanes, and the width may be used.

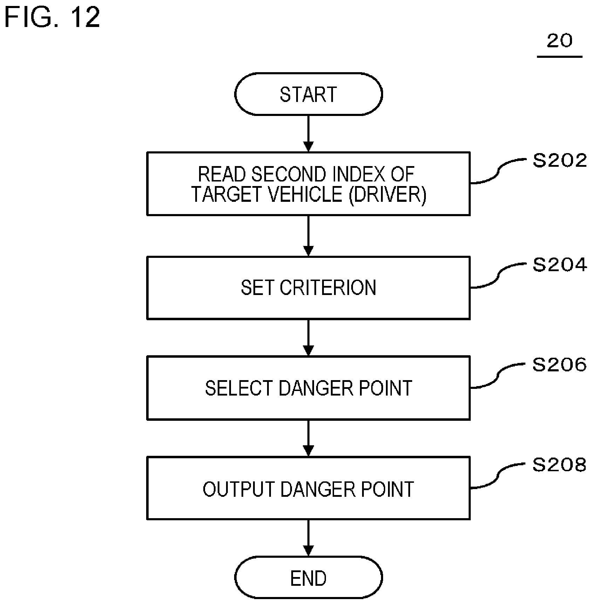

Fig. 12 is a flowchart illustrating an example of a process performed by the information providing apparatus 20. First, the second index acquisition unit 210 of the information providing apparatus 20 acquires at least one of vehicle identification information of the vehicle 60 as a target and driver identification information of the driver. This acquisition may be performed, for example, from a terminal (for example, a navigation apparatus mounted on the vehicle 60 or a mobile terminal having a navigation function held by a passenger of the vehicle 60) (not illustrated) through a communication network or the like, or may be performed by an input to an input device included in the information providing apparatus 20. At this time, the second index acquisition unit 210 may acquire a current position of the vehicle 60 or the terminal. Next, the second index acquisition unit 210 reads the acquired second index corresponding to the acquired vehicle identification information or the driver identification information from the index storage unit 140 of the accident index calculation apparatus 10 (step S202).

Next, the selection criterion setting unit 220 of the information providing apparatus 20 uses the second index acquired in step S202 to set a criterion for selecting a point or an area for which the vehicle 60 or the driver of the vehicle 60 is to be notified of a warning (hereinafter, referred to as a selection criterion), by using the second index (step S204). As an example, the selection criterion setting unit 220 changes the selection criterion described above in a direction in which the degree of danger is lower as the second index becomes higher. This change may be set in stages or may be set in non-stage.

Next, among danger points stored in the map data storage apparatus 50, the point selection unit 230 of the information providing apparatus 20 selects a point or an area in which the degree of danger satisfies the selection criterion set in step S204 as a point or an area to be notified (step S206) . For example, the point selection unit 230 selects a danger point at which the degree of danger is equal to or more than the selection criterion. The transmission unit 240 of the information providing apparatus 20 outputs the danger point selected by the point selection unit 230 (step S208). This output may be performed on, for example, a display or a printer connected to the information providing apparatus 20, or may be performed on a terminal that transmits the vehicle identification information or the driver identification information of the driver.

In step S206, the point selection unit 230 may further use a current position of the vehicle 60 or the terminal to select the point or the area to be notified. For example, among danger points at which the degree of danger is equal to or more than the selection criterion, the point selection unit 230 selects a point or an area within a criterion distance from the current position of the vehicle 60 or the terminal as the point or the area to be notified.

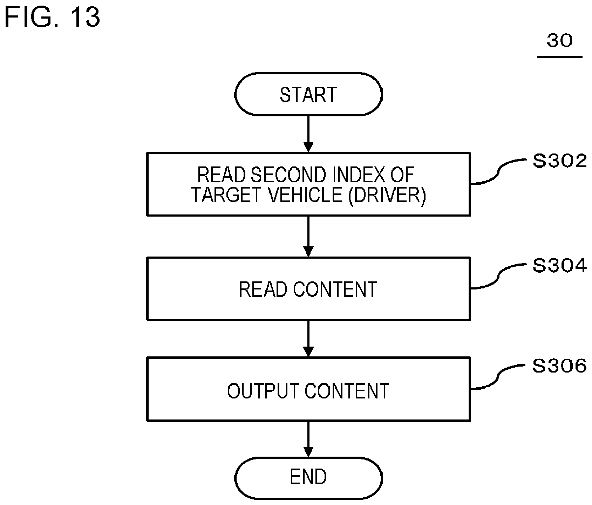

Fig. 13 is a flowchart illustrating an example of a process performed by the content selection apparatus 30. First, the second index acquisition unit 310 of the content selection apparatus 30 acquires at least one of vehicle identification information of the target vehicle 60 and driver identification information of the driver. A method of acquiring these pieces of information has the same manner as the method described in the second index acquisition unit 210 of the information providing apparatus 20 (step S302).

Next, the content selection unit 330 of the content selection apparatus 30 reads contents corresponding to the second index acquired by the second index acquisition unit 310 from the content storage unit 320 (step S304) . The transmission unit 340 outputs the content read by the content selection unit 330 (step S306). This output may be performed on, for example, a display or a printer connected to the content selection apparatus 30, or may be performed on a terminal that transmits the vehicle identification information or the driver identification information of the driver.

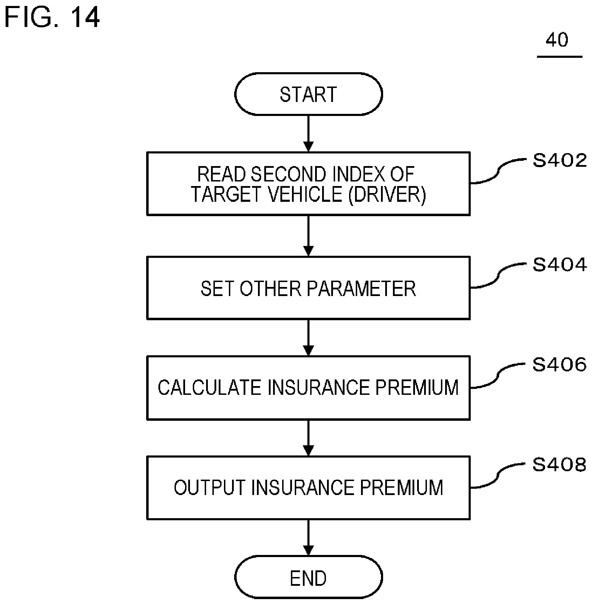

Fig. 14 is a flowchart illustrating an example of a process performed by the insurance premium setting apparatus 40. First, the second index acquisition unit 410 of the insurance premium setting apparatus 40 acquires at least one of vehicle identification information of the vehicle 60 as a target and driver identification information of the driver. The second index acquisition unit 410 also acquires other information necessary for setting an insurance premium. A method of acquiring these pieces of information has the same manner as the method described in the second index acquisition unit 210 of the information providing apparatus 20 (step S402).

Next, the insurance premium setting unit 430 of the insurance premium setting apparatus 40 reads a setting rule for the insurance premium corresponding to the second index acquired by the second index acquisition unit 410 from the setting rule storage unit 420 (setting of other parameters in step S404). Next, the insurance premium setting unit 430 sets the insurance premium by using the read setting rule and the information acquired by the second index acquisition unit 410 (step S406). The transmission unit 440 outputs the set insurance premium (step S408). This output may be performed on, for example, a display or a printer connected to the insurance premium setting apparatus 40, or may be performed on a terminal that transmits the vehicle identification information or the driver identification information of the driver.

As described above, according to the present embodiment, the accident index calculation apparatus 10 uses the first index to calculate the second index related to likelihood of an accident involving the driver of the vehicle 60 or the vehicle 60. The first index is related to the unit road count, which is the number of unit roads included in the travel route per unit travel time, and has a correlation with the likelihood of the accident. Therefore, the second index has a high correlation with the likelihood of the accident.

Further, in a case where the number of links or the number of nodes included in the travel route is used as the first index, the accident index calculation apparatus 10 can easily calculate the first index by using the information stored in the map data storage apparatus 50.

Further, in a case where the travel route specification information of the vehicle 60 is acquired from the mobile communication terminal existing in the vehicle, it is not necessary to connect to the vehicle or fix the terminal to the vehicle, so that the information can be acquired with the simple configuration.

### (Modification Example 1)

As the information stored in the calculation data storage unit 120, that is, the information used for the calculation of the second index, any of the following may be further used for the calculation. In this case, it is possible to calculate the more accurate second index
- the number of passes at railroad crossings
- the number of non-stops at railroad crossings
- the number of passes at an area (for example, ZONE30) in which the maximum speed is set to be equal to or less than a predetermined value (may set entering to exiting as one time, or a travel distance within the ZONE30 may be evaluated instead of the number of passes)
- the number of traffic prohibition violations
- the number of passes at large intersections (the number of lanes is equal to or more than a criterion value, for example, 3 lanes or more on each side) or at complex intersections (the number of intersecting roads is equal to or more than a criterion value, for example, 5 roads or more)
- at least one of vehicle identification information and vehicle type information (for example, by statistically processing the vehicle type information together, the influence degree of attribute information is reflected in the second index).
- at least one of driver identification information and attribute information of a driver (gender, age, and the like) (for example, by statistically processing the attribute information together, the influence degree of the attribute information is reflected in the second index).

### (Modification Example 2)

The first index may be further corrected revised on the following road environment data.
- dynamic parameter

At least one of a road surface condition and congestion information when traveling on the link. In one example, in a case where the road surface condition is frozen (or the weather is snow and the like), the large coefficient is set.
- static parameter

At least one of the ZONE30 described above, a size of an intersection, the presence and absence of traffic lights, a car-only road (for example, the car-only road has a smaller weight in consideration that the number of passing links is relatively smaller than a general road), a link shape (for example, a curvature or the like. Being weighted by the curvature and road complexity is considered), traffic prohibition information (for example, a time zone and date and time (day of the week) when traffic is prohibited, or impassable, only residents can pass, or the like. Being weighted according to these (leading road complexity and a road exposure amount)), one-way information (a time zone and date and time (day of the week) for one-way traffic. Being weighted according to these), and a road administrator (weighted according to a road management status which differs depending on the road administrator).

### (Modification Example 3)

The use of the second index is not limited to the above example. For example, various types of preferential services (lease fee, rental car use fee, and the like) may be received according to a score of the driver. In addition, the second index may be used for evaluating a taxi driver, a bus driver, and a distribution vehicle's driver by a manager. By storing and evaluating the driving score in time-series, the sign of dementia may be grasped based on whether or not a change in the second index satisfies a criterion (whether or not there is a sudden change).

Further, the second index may be used for a driving route recommendation service. For example, by collecting information on the second index calculated for a route having a predetermined distance length and statistically processing the route and the second index, the second index may be used to propose a route having a low probability that an accident (individually or generally) occurs or to avoid a route with the high probability.

### (Modification Example 4)

Regarding the number of non-stops for stop signs, the number of non-stops for stop signs at a location having poor sight-line, and the number of non-stops for stop signs in another location may be separately used in the calculation. In that case, the coefficient may be changed so that the number of non-stops for stop signs at the location having poor sight-line has a greater effect on the accident probability.

Although the embodiments and the examples are described with reference to the drawings, these are examples of the present invention, and various other configurations other than the embodiments and the examples described above may be adopted.

## Claims

1. An accident index calculation apparatus comprising:
a first index acquisition unit that acquires a first index related to a unit road count, which is the number of unit roads included in a travel route on which a vehicle traveled per unit travel time; and
a calculation unit that calculates a second index related to likelihood of an accident involving a driver of the vehicle or the vehicle, by using the first index.

2. The accident index calculation apparatus according to claim 1,
wherein the unit road is determined by using at least one of a node and a link in map data, and
the first index acquisition unit determines the unit road count by using the travel route of the vehicle and the map data.

3. The accident index calculation apparatus according to claim 1 or 2,
wherein the first index acquisition unit calculates the unit road count as the first index.

4. The accident index calculation apparatus according to claim 3,
wherein the first index acquisition unit sets the unit road count revised by using a length of each of the unit roads included in the travel route, as the first index.

5. The accident index calculation apparatus according to claim 3 or 4,
wherein the first index acquisition unit sets the unit road count revised by using at least one of a speed limit, the number of lanes, and a road width of each of the unit roads included in the travel route, as the first index.

6. An information providing apparatus comprising:
a second index acquisition unit that acquires the second index calculated by the accident index calculation apparatus according to any one of claims 1 to 5; and
a selection criterion setting unit that sets a criterion for selecting a point or an area for which the driver is to be notified of a warning by using the second index.

7. A content selection apparatus comprising:
a second index acquisition unit that acquires the second index calculated by the accident index calculation apparatus according to any one of claims 1 to 5; and
a content selection unit that selects a content to be provided to the driver by using the second index.

8. An insurance premium setting apparatus comprising:
a second index acquisition unit that acquires the second index calculated by the accident index calculation apparatus according to any one of claims 1 to 5; and
an insurance premium setting unit that sets an insurance premium to be set for the driver or the vehicle by using the second index.

9. An accident index calculation apparatus comprising:
an acquisition unit that acquires a first index determined according to a fineness of unit roads included in a travel route on which a driver traveled by using a vehicle, and a travel speed on the travel route; and
a calculation unit that calculates a second index related to likelihood of an accident involving the driver of the vehicle or the vehicle, by using the first index.

10. An accident index calculation method comprising:
by a computer,
acquiring a first index related to a unit road count, which is the number of unit roads included in a travel route on which a vehicle traveled per unit travel time; and
calculating a second index related to likelihood of an accident involving a driver of the vehicle or the vehicle, by using the first index.

11. A program causing a computer to have:
a first index acquisition function of acquiring a first index related to a unit road count, which is the number of unit roads included in a travel route on which a vehicle traveled per unit travel time; and
a calculation function of calculating a second index related to likelihood of an accident involving a driver of the vehicle or the vehicle, by using the first index.
